# EUROPÄISCHE PATENTSCHRIFT

(11) **EP 0 396 021 B1**
(45) Veröffentlichungstag und Bekanntmachung des Hinweises auf die Patenterteilung: **06.10.1993**
(21) Anmeldenummer: 90107973.1
(22) Anmeldetag: 26.04.1990
(51) Int. Cl.: B65G 13/02

(54) **Bausatz zum Nachrüsten von Staurollenförderern**
Retrofit kit for accumulating roller conveyors
Jeu de pièces pour adapter des transporteurs d'accumulation à rouleaux

(30) Priorität: 03.05.1989 DE 8905555 U
(43) Veröffentlichungstag der Anmeldung: 07.11.1990
(73) Patentinhaber: GEBHARDT FÖRDERTECHNIK GMBH, D-74889 Sinsheim (DE)
(72) Erfinder: Gebhardt, Elfriede (geb. Kramer), D-74889 Sinsheim (DE)
(74) Vertreter: Ratzel, Gerhard, Dr.

(56) Entgegenhaltungen:
- DE-B- 1 251 221
- DE-B- 1 280 739
- DE-B- 1 456 610
- GB-A- 1 445 214

## Beschreibung

Die Erfindung betrifft einen Bausatz zum Nachrüsten von Staurollenförderern, deren lichtes Staurollenabstandsmaß größer ist als das Auflageelement eines zu transportierenden Behälters bzw. daß der Abstand zweier Rollen so groß ist, daß das Auflageelement des zu transportierenden Behälters die Förderung behindert.

Staurollenförderanlagen zum staudrucklosen Speichern und Transportieren von Stückgut bestehen aus einem Rahmen mit beidseitigen Wangen, zwischen denen das Stückgut tragende, quer zur Transportrichtung drehbar gelagerte Tragrollen angeordnet sind, wobei diese z. B. jeweils durch eine verstellbare Zwischenrolle mit einem ständig umlaufenden Zugmittel antriebsmäßig verbindbar und gruppenweise zusammengefaßt sind. Hierbei sind die Zwischenrollen jeder Rollengruppe durch ein Stellmittel mit einem vom Stückgut gesteuerten Fühler verbunden und durch diesen in eine Antriebs- und Freilaufstellung stellbar.

Die das Stückgut tragenden Rollen stehen in einem bestimmten Achsabstand zueinander. Je nach zu transportierendem Fördergut spielt dieser Achsabstand und der Rollendurchmesser eine wesentliche Rolle.

In der Lagertechnik werden zunehmenst als Kleinlastträger (KLT) bezeichnete Behälter zur Aufnahme von Warenteilen verwendet. Diese Kleinlastträger sind zum Zwecke der gefahrlosen Übereinanderstapelung mit entsprechenden Retentionselementen ausgestattet. Diese Retentionselemente sind gleichzeitig die Auflageelemente während des Fördervorgangs auf den vorgenannten Staurollenförderanlagen.

Ist nun der Achsabstand zweier Förderrollen zu groß und der Durchmesser dieser Rollen zu klein, so ist eine einwandfreie Förderarbeit solcher Kleinlastträger nicht mehr gewährleistet, da die Auflageelemente der Kleinlastträger zwischen die Förderrollen gelangen und sich verklemmen.

Der Erfindung liegt daher die Aufgabe zugrunde, einen Bausatz zu schaffen, der zum Umrüsten vorhandener Förderanlagen gemäß den Gegebenheiten dient.

Diese Aufgabe wird gemäß den Merkmalen des Anspruchs 1 gelöst.

Besondere Ausführungsmerkmale sind in den Unteransprüchen gekennzeichnet.

Anhand den beigefügten Zeichnungen, die besondere Ausführungsbeispiele der Erfindung zeigen wird diese nun näher erläutert.
Dabei zeigen:
- Figur 1: eine perspektivische Darstellung einer nachgerüsteten Förderanlage;
- Figur 2: eine Vergrößerung des in Figur 1 gekennzeichneten Details A;
- Figur 3: eine Frontansicht aus der in Figur 2 angedeuteten Richtung B;
- Figur 4: eine Draufsicht der Figur 3;
- Figur 5: eine Variante zu Figur 4;
- Figur 6: eine Variante zu Figur 4 und 5;
- Figur 7: eine Variante zu Figur 4, 5 und 6;
- Figur 8: die Darstellung eines Kleinlastträgers;
- Figur 9: die Fühlerklappe.

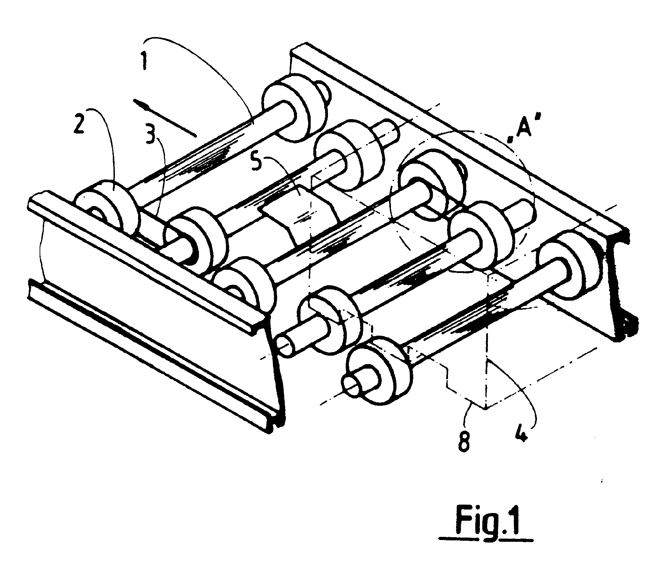

Figur 1 zeigt eine perspektivische Darstellung einer nachgerüsteten Förderanlage.

In diesem Ausführungsbeispiel sind die Rollkörper 2 auf die vorhandenen Förderrollen 1 aufgeschoben. Das Verhältnis des Innendurchmessers des Rollkörpers 2 und des Außendurchmessers der vorhandenen Förderrolle 1 ist dabei so, daß der Rollkörper 2 fest und unbeweglich auf der Förderrolle 1 sitzt.

Die Fühlerklappe 5 ist hierbei in den Förderweg herausragend sichtbar, wobei die Abwinkelung in Transportrichtung hinweist.

Die Fühlerklappe 5 steht hierbei mit einer hier nicht näher bezeichneten und nicht dargestellten Stelleinrichtung in Verbindung.

Der mit dem Bezugszeichen 4 gekennzeichnete Kleinlastträger, insbesondere dessen Auflageelement 8 kann somit nicht mehr in blockierender Weise zwischen die Förderrollen gelangen.

Der Übertriebsriemen 3 verbindet zwei Förderrollen miteinander, um eine bessere Kraftverteilung von den angetriebenen Rollen zu den losen Rollen zu erreichen.

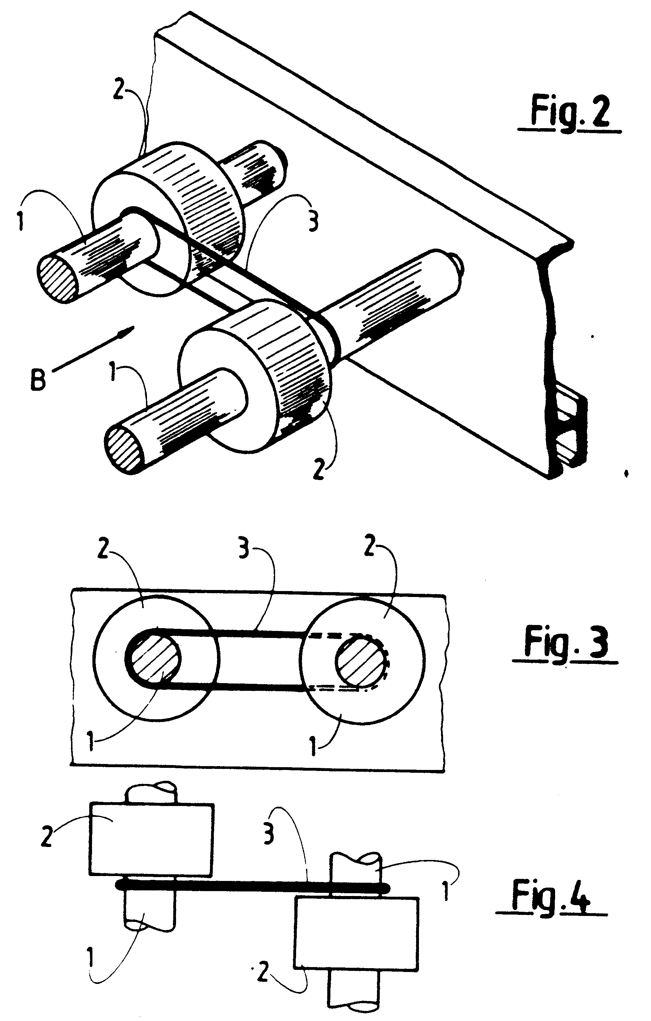

Die Figur 2 zeigt das in Figur 1 mit A gekennzeichnete Detail in einer Vergrößerung, wobei die gleichen Elemente mit den gleichen Bezugszeichen gekennzeichnet sind.

Die Figur 3 zeigt eine Ansicht aus der in Figur 2 angedeuteten Richtung B und die Figur 4 eine Draufsicht auf die Figur 3.

Hierbei wird ersichtlich, daß die Rollkörper 2 versetzt, voneinander mit einem Spalt beabstandet sind.

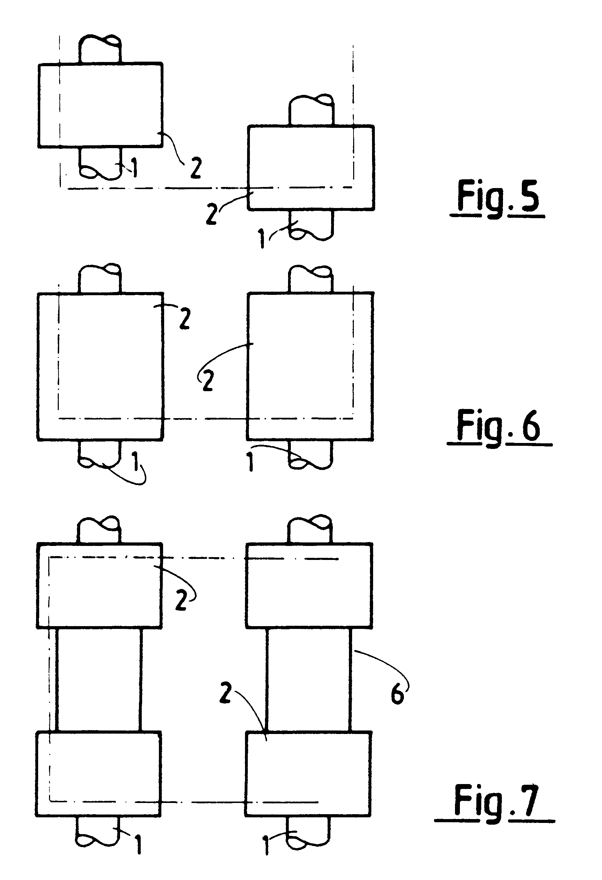

Die Figur 5 zeigt eine Variante hierzu, wobei die Rollkörper 2 versetzt, jedoch überlappend einander zugeordnet sind.

Figur 6 zeigt zwei Rollkörper 2, die die gleiche Förderbreite einnehmen.

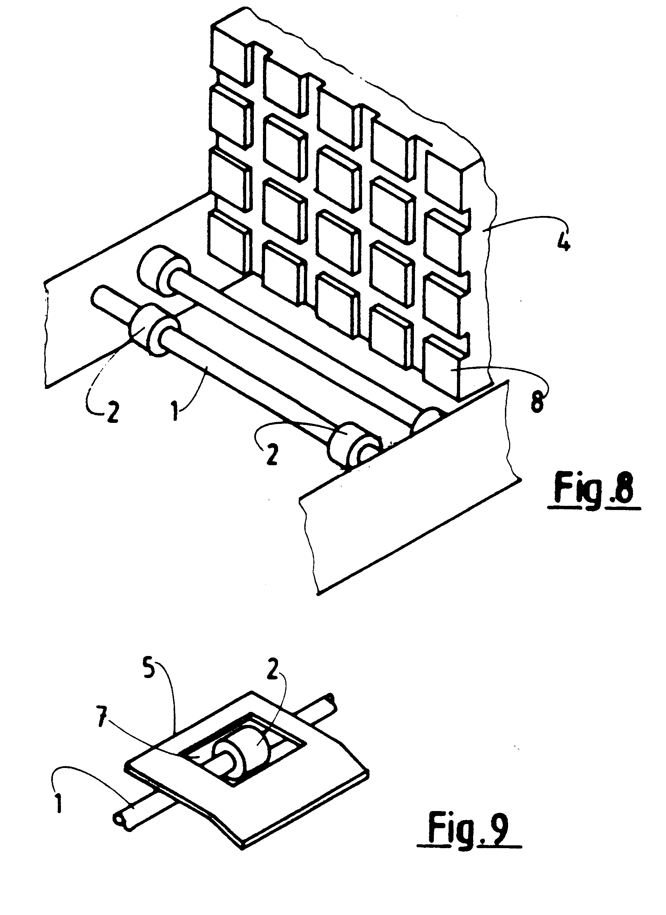

Figur 7 zeigt die Möglichkeit auf eine Förderrolle 1 nur ein Rollkörper 2 aufzuschieben, wobei dieser eine Eindrehung 6 aufweist, um die Stellbewegung der Fühlerklappe 5 nicht zu behindern.

Figur 8 zeigt eine perspektivische Darstellung des Kleinlastträgers 4, wobei dieser hochgekippt ist, um die Ausgestaltung des Bodens, mit dessen Auflageelementen 8 darzustellen.

Die Figur 9 zeigt ein Ausführungsbeispiel der Fühlerklappe 5, die einerseits geschlossen ausgebildet sein kann oder aber zum Zwecke des Durchragends eines Rollkörpers 2 eine Durchbrechung 7 aufweist.

Mit der vorliegenden Erfindung wird ein Bausatz bereitgestellt, mit dem vorhandene Staurollenförderanlagen derart umgerüstet werden können, daß jedes anfallende Transportgut unabhängig von dessen Formgebung transportiert werden kann.

## Patentansprüche

1. Bausatz zum Nachrüsten von Staurollenförderern, deren lichtes Staurollenabstandsmaß größer ist als das Auflageelement eines zu transportierenden Behälters, dadurch gekennzeichnet,
daß der Bausatz für je eine nachzurüstende Staurolle (1) aus mindestens einem die Staurolle (1) umfassenden rohrförmigen Rollkörper (2) besteht, sowie einen zwei Staurollen (1) verbindenden Übertriebsriemen (3) und je Rollengruppe eine in Förderrichtung abgewinkelter, durch das Transportgut (4) aktivierten und eine Stellarbeit ausführenden Fühlerklappe (5) enthält.

2. Bausatz nach Anspruch 1,
dadurch gekennzeichnet,
daß der Rollkörper (2) als Hohlzylinder ausgebildet ist und zur Aufnahme der Fühlerklappe (5) eine radiale Eindrehung (6) aufweist.

3. Bausatz nach Anspruch 1,
dadurch gekennzeichnet,
daß auf einer Staurolle (1) beidseitig je ein Rollkörper (2) in Form eines Hohlzylinders angeordnet ist.

4. Bausatz nach Anspruch 1 und/oder 3,
dadurch gekennzeichnet,
daß auf zwei hintereinander angeordneten Staurollen (1) jeweils beidseitig einer Staurolle (1) zueinander versetzt je ein Rollkörper (2) in Form eines Hohlzylinders vorgesehen sind.

5. Bausatz nach Anspruch 1, 3 und 4,
dadurch gekennzeichnet,
daß die Fühlerklappe (5) zum freien Durchlaß eines Rollkörpers (2) eine Durchbrechung (7) aufweist.

6. Bausatz nach Anspruch 1 und 3 - 5,
dadurch gekennzeichnet,
daß die Übertriebsriemen (3) vorzugsweise zwischen zwei versetzt einander zugeordneten Rollkörpern (2), zwei Staurollen (1) reibschlüssig verbindend angeordnet ist.

## Claims

1. A kit for the retrofitting of accumulator-type roller conveyors, of which the clear accumulator-type roller spacing is greater than the contact element of a container to be conveyed, characterised in that for each accumulator-type roller (1) to be retrofitted the kit comprises at least one tubular roller body (2) embracing the accumulator-type roller (1), as well as a transmission belt (3) connecting two accumulator-type rollers (1) and each group of rollers includes a feeler flap (5) which is bent in the conveying direction, which is activated by the articles being conveyed and which carries out a control operation.

2. A kit according to Claim 1, characterised in that the roller body (2) is in the form of a hollow cylinder and has a radial groove (6) to accommodate the feeler flap (5).

3. A kit according to Claim 1, characterised in that a roller body (2) in the form of a hollow cylinder is disposed at each end of one accumulator-type roller (1).

4. A kit according to Claims 1 and/or 3, characterised in that on two accumulator-type rollers (1) arranged one behind the other there are provided, at each end of the accumulator-type rollers (1), respective roller bodies (2) in the form of a hollow cylinder and offset relative to one another.

5. A kit according to Claims 1, 3 and 4, characterised in that the feeler flap (5) has an opening (7) for the free passage of a roller body (2).

6. A kit according to Claims 1 and 3 to 5, characterised in that the transmission belt (3) is preferably disposed between two roller bodies (2), which are arranged offset with respect to one another, and connects two accumulator-type rollers (1) in a frictional manner.

## Revendications

1. Lot de rattrapage pour des transporteurs d'accumulation à rouleaux dont la cote d'écartement des rouleaux est plus grande que l'élément d'appui d'un colis à transporter,
**caractérisé** en ce que le lot est constitué, pour chaque rouleau (1) à rattraper, d'au moins un corps de révolution tubulaire (2) entourant le rouleau (1), ainsi que d'une courroie de transmission (3) reliant deux rouleaux (1) et, pour chaque groupe de rouleaux, d'un volet détecteur (5), coudé dans la direction de transport, qui est activé par le colis transporté (4) et réalise une commande de positionnement.

2. Lot selon la revendication 1, **caractérisé** en ce que le corps de révolution (2) est configuré en cylindre creux et présente une gorge radiale (6) pour recevoir le volet détecteur (5).

3. Lot selon la revendication 1, **caractérisé** en ce qu'un corps de révolution respectif (2) en forme de cylindre creux est disposé de chaque côté sur un rouleau (1).

4. Lot selon les revendications 1 et/ou 3, **caractérisé** en ce que des corps de révolution respectifs (2) en forme de cylindres creux sont disposés de chaque côté de deux rouleaux consécutifs (1) en étant mutuellement décalés.

5. Lot selon les revendications 1, 3 et 4, **caractérisé** en ce que le volet détecteur (5) présente une découpure (7) pour le libre passage d'un corps de révolution (2).

6. Lot selon les revendications 1 et 3 à 5, **caractérisé** en ce que la courroie de transmission (3) est de préférence disposée entre deux corps de révolution (2) mutuellement décalés, en reliant deux rouleaux (1) en entraînement par friction.
